# EUROPEAN PATENT APPLICATION

(11) **EP 3 500 067 A1**
(43) Date of publication of application: **19.06.2019**
(21) Application number: 17207199.5
(22) Date of filing: 14.12.2017
(51) Int. Cl.: H05B 33/08, H02M 1/42, H02M 1/44, H02M 3/337, H02M 1/00

(54) **POWER SUPPLY CIRCUIT AND POWER SUPPLY METHOD**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

The invention relates to supplying power. So to provide a DC voltage based on an AC voltage with a low level of electro-magnetic interference while allowing for a desired power factor, the power supply circuit comprises an input stage unit, an energy storage element, and an output stage unit, wherein the power supply circuit is arranged for a first mode and a second mode, wherein, in the first mode, the input stage unit stores energy in the energy storage element based on received AC voltage and the output stage unit does not receive energy from the energy storage element for providing the DC voltage, wherein, in the second mode, the input stage unit does not store energy in the energy storage element and isolates the energy storage element from the AC voltage input and the output stage unit receives energy from the energy storage element for providing the DC voltage.

## Description

### FIELD OF THE INVENTION

The present invention relates to a power supply circuit, a method for providing a DC voltage based on an AC voltage and a corresponding software product for controlling such power supply circuit and in particular to implementations thereof in the context of lighting, especially in the context of lighting devices including light emitting diodes as loads.

### BACKGROUND OF THE INVENTION

Today's power supply circuits mostly are switched mode power supply circuits. These circuits convert the power coming from a first power source having a first voltage and current level into power for a load or storage element that requires a voltage or current level that is different from the first level. These power supplies are typically preferred in the form of switched mode power supplies (SMPS), which have the advantage of being small and efficient when operating at several tens of kHz or higher.

One typical application of such SMPS is a LED driver. This LED driver converts e.g. the power provided from a mains connection having mains voltage (for instance 230V RMS at 50Hz) into a controlled current for driving a LED or arrangement of LEDs.

Unfortunately, due to the alternating characteristic of the mains voltage, the energy transfer is not continuous but pulsating with mains frequency. Especially at the moment when the mains voltage has a zero crossing energy transfer is not possible. If this pulsating energy flow would be directly used for driving an LED lamp this would also result in a pulsating output current, which might result in an observably pulsating light output. This is unwanted and not acceptable. To address this issue, these power converters mostly comprise an energy storage element to buffer energy coming from the power source to bridge the power gap around the mains zero crossing (see, for instance, US 4,821,166 which shows such a power converter with such storage element).

As already described in US 4,821,166, the high frequency switching action of the power converter may cause undesired high frequency currents flowing back into mains (also known as conducted electro-magnetic interference EMI). The amount of HF current that is allowed to flow is limited by the regulation authorities of the countries where the converter is operated, for Europe this is e.g. described in IEC 61000-3-2.

A known approach to limiting this high frequency interference includes the application of filters at the input of such power converters (see also US 4,821,166 showing a filter being present at the input of the power converter).

As an alternative to such filter or at least as a means to reduce the size and cost of such filter US 4,821,166 proposes a method that makes use of a bridge rectifier circuit that is located between the mains connection and the SMPS. If the actual voltage across the storage element is higher than the actual mains voltage the bridge rectifier is blocking. Only if the actual mains voltage is higher than the voltage across the storage element the bridge rectifier is conducting and only then current can flow from mains into the storage element and/or the power converter. US 4,821,166 proposes to operate the SMPS in such way that the switch included therein is turned on only at times outside the time intervals in which the AC source is connected to the storage element, i.e. only during the fractions of the mains period when the diode bridge is blocking because during these times the SMPS is disconnected from mains and any disturbance generated by the SMPS can hardly disturb the mains.

Such method of reducing EMI as described in US 4,821,166, however, can only work if there is a reasonable timeslot within the mains period without current flow from the mains through the rectifier bridge, while such timing depends on the waveform of the mains current / voltage which determines the conduction state of the bridge rectifier. The length of such timeslot is mainly determined by the size of the energy buffer or storage element. The larger the buffer the smaller the conduction time of the input rectifier and the longer the time the SMPS can be operated.

Unfortunately, the relevant technical norms do not only limit the high frequency currents flowing but also specify other parameters of such power converters, amongst others the so-called power factor (being the ratio of real power and apparent power of a converter). Specifically, the larger the energy storage element connected to the bridge rectifier the lower the power factor.

This means that, in view of the existing norms already, the approach of US 4,821,166 can only be used for systems with quite low power, e.g. below 5W, where there is currently no requirement for the power factor.

Especially above 25W the requirements for the power factor are that high that the approach of US 4,821,166 is not applicable anymore. In these cases there is virtually a constant current flow from mains to the converter, so there is no time left over for the SMPS to operate. In the future regulations, in particular for light sources, may change so that even loads with lower power will have this limitation.

### SUMMARY OF THE INVENTION

It is an object of the present invention to provide an approach for providing a DC voltage based on an AC input which overcomes or at least mitigates the shortcomings of the existing approaches and which specifically provides for a low level of electro-magnetic interference while also allowing for a sufficiently high power factor.

In a first aspect of the present invention a power supply circuit for providing a DC voltage is presented comprising an input stage unit including an AC voltage input for receiving an AC voltage, an energy storage element coupled to the input stage unit, and an output stage unit coupled to the energy storage element, the output stage unit including a DC-DC converter for providing the DC voltage, wherein the power supply circuit is arranged for a first mode and a second mode, wherein, in the first mode, the input stage unit is arranged for storing energy in the energy storage element based on the received AC voltage and the output stage unit is arranged for not receiving energy from the energy storage element for providing the DC voltage, wherein, in the second mode, the input stage unit is arranged for not storing energy in the energy storage element and for isolating the energy storage element from the AC voltage input and the output stage unit is arranged for receiving energy from the energy storage element for providing the DC voltage.

In a second aspect of the present invention a method for providing a DC voltage based on an AC voltage is presented, comprising a first mode including the steps of receiving the AC voltage at an input stage unit and storing energy in an energy storage element based on the received AC voltage, and a second mode including the steps of isolating the energy storage element from an AC voltage input, receiving a voltage of the energy storage element at an output stage unit and DC-DC converting the voltage of the energy storage element for providing the DC voltage, wherein the first mode and the second mode are provided alternating and, in the first mode, the output stage unit does not receive energy from the energy storage element for providing the DC voltage, and, in the second mode, the input stage unit does not store energy in the energy storage element.

A part of the present invention includes the realization of benefits involved with actively controlling the times where current can flow from mains into a storage element, especially to define time slots where energy is transferred from mains into the energy storage element and other timeslots where the energy storage element and the coupled power converter coupled thereto are actively disconnected from mains. If the energy storage element is selected to be large the timeslots of charging the energy storage element can be long compared to the mains period. Then also the discharge timeslots can be long compared to the mains period.

Instead of using an uncontrolled bridge rectifier to charge the energy storage element it is proposed to use a (separate) power converter or input stage unit that is optimized for charging the energy storage element in a controlled way and that is designed to have low EMI. This first converter may be referred to as a PFC (power factor correction) stage converting the AC mains input into a DC that is stored by the energy buffer formed by the energy storage element(s). The PFC stage takes care of meeting the requirements regarding power factor and mains harmonics.

The converter that drives the LED load (as an example of a load to which the power is supplied) may be referred to as a DC-DC converter as it converts the DC energy stored in the energy storage element (DC voltage) into a DC LED current. The DC-DC converter is predominantly operated in timeslots when the charging mains frontend (e.g. PFC power converter) is not conducting and thus there is no direct connection of the energy storage element to the mains.

It is contemplated by the inventors that, in such context, any (additionally provided) EMI filter (if needed at all) can be optimized for the PFC converter and is independent of the load DC-DC converter.

In a preferred embodiment, the power supply circuit is arranged for, when in operation, being in either the first or the second mode.

Preferably, there is no overlapping between operation states corresponding to the first mode and the second mode, as in such overlapping operation states there might be detrimental effects on the performance, in particular in terms of EMI but possibly also in terms of power factor. It is to be noted that the power supply circuit may also be inactive at all, e.g. in a case where the energy storage element is fully charged and there is no operation on the side of the load, i.e. no need for any energy transfer at all.

In a preferred embodiment, the energy storage element includes a rechargeable battery.

It may be beneficial to use a battery as a storage element, as batteries can store large amounts of energy. That allows operating the load for a long time compared to a mains period. This can even be hours or more depending on the size of the battery.

For an embodiment in which the energy storage element includes a rechargeable battery, it may be noted that the change of battery voltage between fully charged and fully discharged is limited by the battery technology. E.g. "all" the energy of a Lithium-ion battery is available with a voltage window of 4.2V down to 2.7V (per cell, higher voltages possible by series connection), and for long lifetime, the practical voltage window is often narrowed even further (e.g. do not "store" the battery at full 4.2V, do not discharge below 3.0V). Hence, the load voltage, into which the input stage unit has to deliver its power in an EMI-compliant manner, is limited, compared to capacitor operation. Furthermore, the change of voltage is, normally, due to the relatively high capacity of a battery, slow compared to charging a capacitor. Hence, different, optimized switching pattern can be applied in a slow sequence. At a given point in time, the battery voltage will be x, and during a changing interval Δₜ, only a very limited Δₓ will be added. Hence, an optimization of switching pattern/frequency may be calculated (or read from a pre-calculated table) for actual operation point x+(0.5 Δₓ) ≈ x and applied for the period Δₜ. Harmonic cancelation techniques can hence be applied more effectively and/or with less computational effort, because Δₜ is way larger than with capacitors. This enables using such techniques on smaller, lower cost micro controller (µC). The EMI generated by the load DC-DC converter has no conductive path to the mains input. This gives high design freedom for the DC-DC converter and allows e.g. for miniaturization, higher efficiency, adaptive switching frequency etc.

In an advantageous modification of the above embodiment, the input stage unit includes a battery charger unit.

In case of providing a charger unit in addition to a circuit (portion) addressing the power factor correction, it is possible to allow the current (and/or voltage) provided into the battery to have a different shape from that generated by the PFC stage, so to provide for optimized charging of the battery, e.g. with constant current and/or constant voltage.

In a preferred embodiment, the power supply circuit further includes a controller, wherein the controller is arranged for controlling the power supply circuit such that a given period is divided into timeslots, including first timeslots for the first mode and second timeslots for the second mode.

The operation of the controller, however, may include other aspects for the switching between the first and the second mode, e.g. depending on the operational situation of the load coupled to the power supply circuit.

In an advantageous modification of the above embodiment at least a length of the time slot for the first mode is longer in the range of one or more orders of magnitude than a length of a period of the AC voltage.

With the active control as to the conducting connection between the AC voltage input and the energy storage element, the timing of charging becomes independent from the waveform of the AC voltage, such that the time for charging may encompass several periods of the AC voltage. For a typical lighting application there are times when the lights are active (e.g. during the night) and when the lights are inactive (e.g. during the day). According to the invention the charging process may take place when the lights are off (the DC-DC converter is not active). The charging process is stopped when the battery is fully charged or the lights are activated.

In another advantageous modification of the above embodiment the lengths of the first and second time slots are respectively equal to a length of a half period of the AC voltages or to an integer multiple thereof.

If, for whatever reason, a large energy storage element is not preferred, the charging/discharging cycle can be realized at a higher frequency, e.g. once per second, but at maximum with half the mains frequency, e.g. with 25 Hz or 30 Hz. In that case there is e.g. a charging period of one mains cycle and a discharging period of one mains cycle. Preferably the charging is synchronized to the mains zero crossing to enable a high power factor and low harmonic currents. To avoid visible light artifacts (flicker) at the light output a second energy buffer on the load side is advantageous.

In a preferred embodiment, the power supply circuit is arranged for adjusting a duration of the first mode and/or a duration of the second mode based on at least one operational parameter of a load to which the DC voltage is provided and/or of the power supply circuit.

The usage of the energy available in the energy storage element can be triggered by time and/or by operation mode. Input power of light sources may depend e.g. on time or operation condition variables, e.g. with elevated temperature, efficiency of LEDs typical decreases, such that input power needs to be increased in order to provide same light output. In such a case, the duration of each discharge interval would need to be reduced, to keep energy balance correct.

In a preferred embodiment, the output stage unit includes an energy buffer.

In a preferred embodiment, the power supply circuit further comprises a second energy storage element provided in parallel to the energy storage element, wherein the power supply circuit is further arranged for a third mode and a fourth mode, wherein, in the first mode, the input stage unit is further arranged for not storing energy in the second energy storage element and for isolating the second energy storage from the AC voltage input and the output stage unit is further arranged for receiving energy from the second energy storage element for providing the DC voltage, wherein, in the second mode, the input stage unit is further arranged for storing energy in the second energy storage element based on the received AC voltage and the output stage unit is further arranged for not receiving energy from the second energy storage element for providing the DC voltage, wherein, in the third mode, the input stage unit is arranged for storing energy, based on the received AC voltage, in the energy storage element and the second energy storage element and the output stage unit is arranged for neither receiving energy from the energy storage element nor from the second energy storage element for providing the DC voltage, wherein, in the fourth mode, the input stage unit is arranged for neither storing energy in the energy storage element nor in the second energy storage element and for isolating the energy storage element and the second energy storage element from the AC voltage input and the output stage unit is arranged for receiving energy from the energy storage element and from the second energy storage element for providing the DC voltage.

In such embodiment the (first) energy storage element can be charged while the second energy storage element is used to supply the power to the load, or vice versa. In case of the load being not active both energy storage elements can be charged in parallel. In case high power is needed, both energy storage elements can be used to supply the power to the load(s) in parallel.

In a preferred embodiment, the power supply circuit is included in a lighting device further including a lighting load coupled to the output stage unit for receiving the DC voltage, wherein the lighting load preferably includes a light emitting diode

The aspects of EMI and power factor are of particular interest in the context of lighting and especially with LED(s), so that the invention is particular beneficial in such context.

In a further aspect of the present invention a computer program is presented for a controller of a power supply circuit, the software product comprising program code means for causing the power supply circuit to carry out the steps of the method according to the present invention when the software product is run on a controller of a power supply circuit according to the present invention.

It shall be understood that the power supply circuit of claim 1, the method for providing a DC voltage based on an AC voltage of claim 13, and the computer program of claim 14 have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a simplified block diagram of a lighting device including a power supply circuit in accordance with an embodiment of the invention,
Fig. 2 shows a circuit diagram of a basic buck converter which may be used in a power supply circuit in accordance with another embodiment of the invention,
Fig. 3 shows a circuit diagram of a basic buck-boost converter which may be used in a power supply circuit in accordance with another embodiment of the invention,
Fig. 4 shows a circuit diagram of a basic boost converter which may be used in a power supply circuit in accordance with another embodiment of the invention,
Fig. 5 shows a simplified block diagram of a lighting device including a power supply circuit in accordance with another embodiment of the invention,
Fig. 6 shows a diagram for illustrating a mains cycle stealing method which may be included in an operation according to an embodiment of the present invention,
Fig. 7 shows a simplified block diagram of a lighting device including a power supply circuit in accordance with another embodiment of the invention,
Fig. 8 shows a simplified block diagram of a lighting device including a power supply circuit in accordance with another embodiment of the invention, and
Fig. 9 shows a flow diagram for illustrating a method for providing a DC voltage based on an AC voltage in accordance with another embodiment of the invention.

### DETAILED DESCRIPTION OF EMBODIMENTS

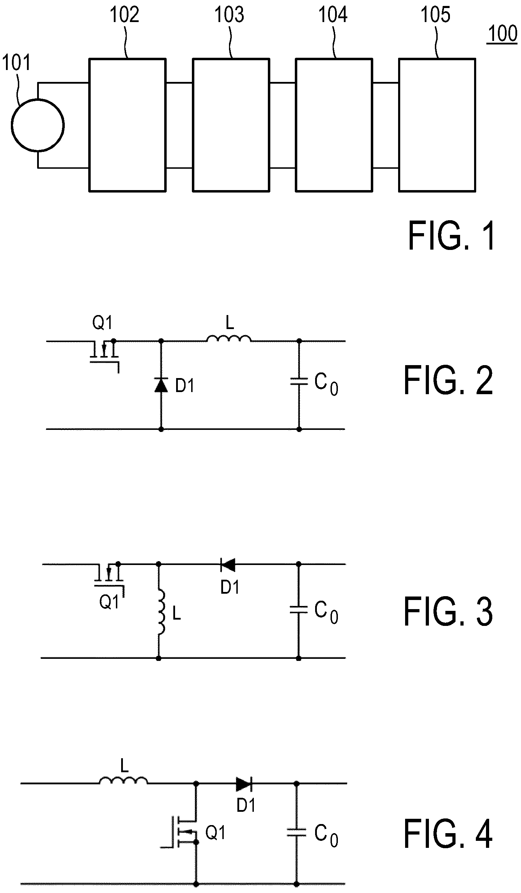

Fig. 1 shows a simplified block diagram of a lighting device including a power supply circuit in accordance with an embodiment of the invention.

A PFC 102, as an example of an input stage unit, is supplied from AC mains 101 and takes care of charging an energy storage element 103. The PFC stage 102 is constructed in a way that it generates low EMI levels well within the regulations. The lighting device 100 further includes a LED driver 104 as an example of an output stage unit which takes energy from the energy storage element 103 and drives a LED string 105 as an example of a load. The PFC 102 is able to interrupt the connection between mains 101 and energy storage 103. Thus, the conducted EMI generated by the LED driver 104 will be blocked or at least damped. This allows to build a more simple and efficient LED driver 104.

One aspect of the simplification as to the shown block diagram here is that no input rectifier is shown. As the skilled person will appreciate, however, such rectifier, e.g. in form of a bridge rectifier, may be included in the implementations of the invention as necessary.

Fig. 2 shows a circuit diagram of a basic buck converter which may be used in a power supply circuit in accordance with another embodiment of the invention.

Fig. 3 shows a circuit diagram of a basic buck-boost converter which may be used in a power supply circuit in accordance with another embodiment of the invention.

Fig. 4 shows a circuit diagram of a basic boost converter which may be used in a power supply circuit in accordance with another embodiment of the invention.

It is contemplated by the inventors to use a PFC stage of buck type to charge the energy storage, as shown in Figure 2. An advantage of this type of converter is that if the converter is not operated the output is automatically disconnected from the input. As long as the voltage level of the storage element is low compared to the mains voltage level the power factor of such converter can be high.

Alternatively, a PFC stage of buck-boost type (see Fig. 3) may be used to charge the energy storage element, having the same advantage as the buck converter (no connection between input and output when inactive), but further allows to freely select the voltage level of the energy storage element to be independent of the input voltage level. This allows for even higher power factors.

Furthermore, it is also possible to use a PFC stage of boost type to charge the energy storage element. In this case the control has to take care that the voltage at the energy storage component is always higher than the peak mains voltage when operating the output converter to make sure that the diode D1 in Fig. 4 is blocking. Using a boost converter allows for high power factors as well.

Other converters like isolating converters (flyback, forward, half-bridge etc.) are also suited, as the isolation barrier of such converters also provides isolation for the EMI generated by the DC-DC converter in the output stage unit.

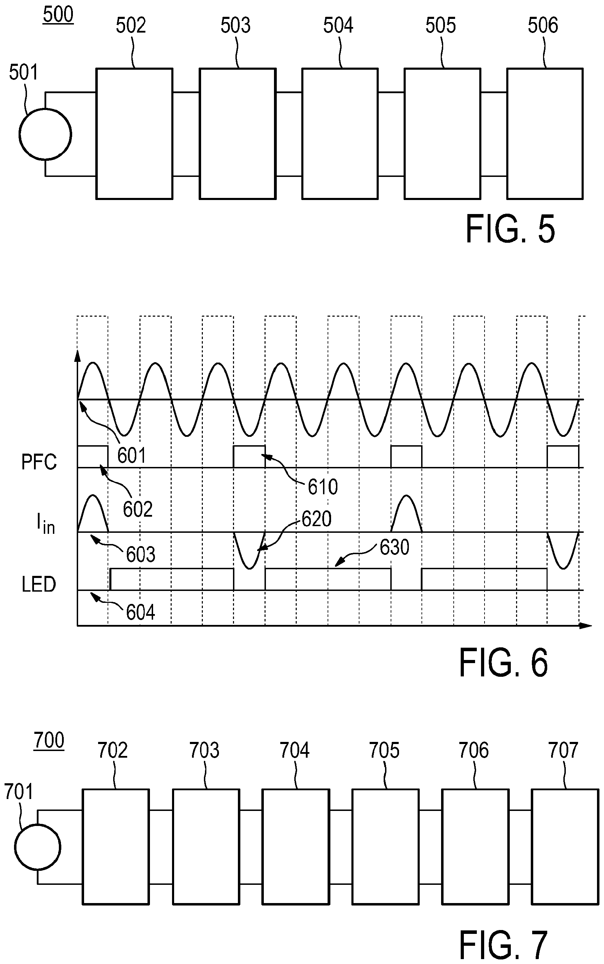

Fig. 5 shows a simplified block diagram of a lighting device including a power supply circuit in accordance with another embodiment of the invention.

As already discussed above, the PFC at the input of the system is provided to mainly take care of meeting the requirements regarding power factor and mains harmonics. This means that it may control the input current shape to match as good as possible the input voltage shape. This may result in almost sinusoidal input currents. In systems where a battery is used as energy storage it is advantageous to control the current into the battery to have a different shape as it is generated by the PFC stage. Thus, in a preferred embodiment the PFC is followed by a dedicated battery charger block that allows for optimized charging of the battery, e.g. constant current / constant voltage charging, as illustrated in Fig. 5.

The lighting device 500, similar to the lighting device 100 shown Fig. 1, includes a PFC 502 as part of an input stage unit coupled to mains 501, an energy storage element 504 (here a battery), an output stage unit 505 (a LED driver) and an LED string 506 as a load.

In addition, however, between the PFC 502 and the battery 504, a dedicated battery charger 503 is provided.

The DC-DC converter that drives the LED load 506 can be any converter that allows driving a LED load 506. Due to the operating principle of charging timeslots and discharging timeslots of this embodiment of the present invention the choice is not limited to DC-DC converter designs having a small EMI footprint but allows also for converter designs usually suffering from EMI problems (e.g. due to very high switching frequencies of hard switching operation). This applies basically to other embodiments of the invention as well.

Fig. 6 shows a diagram for illustrating a mains cycle stealing method which may be included in an operation according to an embodiment of the present invention.

Cycle stealing may also be done with increased charging currents (compared to the discharging current) which allows expanding the number of operational half wave periods for the LED driver. The non-operational half waves when the PFC is working are preferably controlled to be even numbered negative and positive periods in order to suppress any mains DC current components but they do not necessarily need to be continuous. Such a control is illustrated in Fig. 6.

Fig. 6 illustrates the waveform 601 of the mains, indicates the operational state of the PFC 602, the input current to the energy storage element 603 and the LED driving stage 604.

Every 5th mains half wave 620 is gated through the PFC (see control 610) to charge the energy storage element and in-between the load driver is enabled (630). This method, however, may still cause so called flicker.

Fig. 7 shows a simplified block diagram of a lighting device 700 including a power supply circuit in accordance with another embodiment of the invention.

To enable (substantially) flicker free constant light output a second energy storage element may be provided that is charged from the first storage element and that provides power to the load during the period when the first battery is charged, as illustrated in Fig. 7

Coupled to mains 701, a PFC 702 is provided as an example of an input stage unit, which is also coupled to an energy storage element 703. A DC-DC converter 704 is coupled to the energy storage element 703 and provides the converter DC power to an energy buffer 705, which is also coupled to an LED driver 706, operating an LED string 707.

Such embodiment allows to simultaneously charge the energy storage element 703 and the energy buffer 705 if the LED driver 706 is not operational, to charge the energy storage element 703 and discharge the energy buffer 705 to drive the LED 707, to discharge the energy storage element 703 and charge the energy buffer 705 and drive the LED load 707.

Further it allows to only charge energy first storage element 703 while the remaining circuit is inactive, to charge the energy buffer 705 from the energy storage element 703 while the remaining circuit is inactive and to discharge the energy buffer 705 to drive the LED load 707 while the rest of the circuit is inactive.

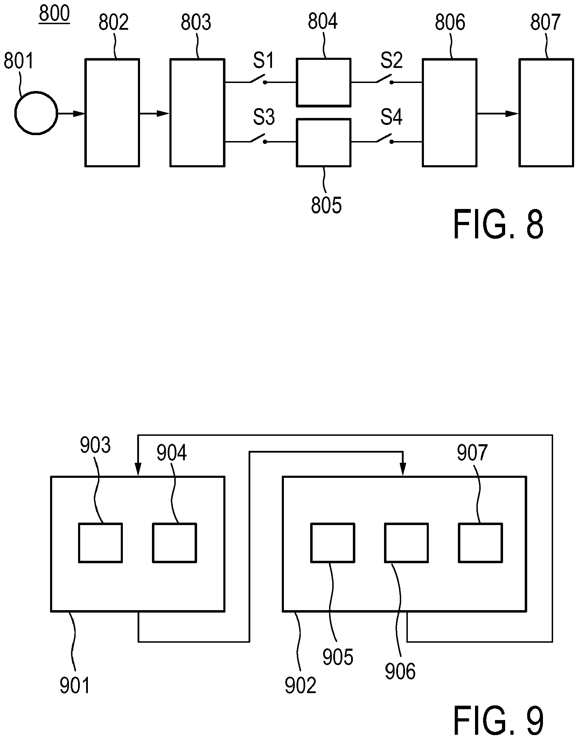

Fig. 8 shows a simplified block diagram of a lighting device including a power supply circuit in accordance with another embodiment of the invention.

The lighting device 800 is similar to lighting device 500 shown in Fig. 5 in including a PFC 802 connected to mains 801, providing power to a battery charger 803. There is further a LED driver 806 and a LED string 707.

Instead of just one energy storage element, there are provided a first energy storage element 804 and a second energy storage element 805 provided in parallel between the battery charger 803 and the LED driver 806, wherein the connections are provided with switches S1 to S4.

In the first mode, switches S1 and S4 are ON, while switches S2 and S3 are OFF. In the second mode, switches S2 and S3 are ON, while switches S1 and S4 are OFF.

Fig. 9 shows a flow diagram for illustrating a method for providing a DC voltage based on an AC voltage in accordance with another embodiment of the invention.

The method comprises a first mode 901 and a second mode 902, which are provided in sequence during the operation as such.

The first mode 901 includes the steps of receiving 903 the AC voltage at an input stage unit and storing 904 energy in an energy storage element based on the received AC voltage.

The second mode 902 includes the steps of isolating 905 the energy storage element from an AC voltage input, receiving 906 a voltage of the energy storage element at an output stage unit and DC-DC converting 907 the voltage of the energy storage element for providing the DC voltage.

In the first mode, the output stage unit does not receive energy from the energy storage element for providing the DC voltage, and, in the second mode, the input stage unit does not store energy in the energy storage element.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single processor, device or other unit may fulfill the functions of several items recited in the claims. The mere fact that certain measures are recited in mutually different dependent claims does not indicate that a combination of these measures cannot be used to advantage.

A computer program may be stored and/or distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A power supply circuit (100, 500, 700, 800) for providing a DC voltage, comprising:
an input stage unit (102, 502, 503, 702, 802, 803) including an AC voltage input for receiving an AC voltage,
an energy storage element (103, 504, 703, 804) coupled to the input stage unit (102, 502, 503, 702, 802, 803), and
an output stage unit (104, 505, 704, 705, 706, 806) coupled to the energy storage element (103, 504, 703, 804), the output stage unit (104, 505, 704, 705, 706, 806) including a DC-DC converter for providing the DC voltage,
wherein the power supply circuit (100, 500, 700, 800) is arranged for a first mode and a second mode,
wherein, in the first mode, the input stage unit (102, 502, 503, 702, 802, 803) is arranged for storing energy in the energy storage element (103, 504, 703, 804) based on the received AC voltage and the output stage unit (104, 505, 704, 705, 706, 806) is arranged for not receiving energy from the energy storage element (103, 504, 703, 804) for providing the DC voltage, wherein, in the second mode, the input stage unit (102, 502, 503) is arranged for not storing energy in the energy storage element (103, 504, 703, 804) and for isolating the energy storage element (103, 504, 703, 804) from the AC voltage input and the output stage unit (104, 505, 704, 705, 706, 806) is arranged for receiving energy from the energy storage element (103, 504, 703, 804) for providing the DC voltage.

2. The power supply circuit (100, 500, 700, 800) according to claim 1,
wherein the power supply circuit (100, 500, 700, 800) is arranged for, when in operation, being in either the first or the second mode.

3. The power supply circuit (500, 800) according to claim 1,
wherein the energy storage element (504, 804) includes a rechargeable battery.

4. The power supply circuit (500, 800) according to claim 3,
wherein the input stage unit (502, 503, 802, 803) includes a battery charger unit (503, 803).

5. The power supply circuit (100, 500, 700, 800) according to claim 1,
further including a controller, wherein the controller is arranged for controlling the power supply circuit (100, 500, 700, 800) such that a given period is divided into timeslots, including first timeslots for the first mode and second timeslots for the second mode.

6. The power supply circuit (100, 500, 700, 800) according to claim 5,
wherein at least a length of the time slot for the first mode is longer in the range of one or more orders of magnitude than a length of a period of the AC voltage.

7. The power supply circuit (100, 500, 700, 800) according to claim 5,
wherein the lengths of the first and second time slots are respectively equal to a length of a half period of the AC voltages or to an integer multiple thereof.

8. The power supply circuit (100, 500, 700, 800) according to claim 1,
wherein the power supply circuit is arranged for adjusting a duration of the first mode and/or a duration of the second mode based on at least one operational parameter of a load (104, 506, 707, 807) to which the DC voltage is provided and/or of the power supply circuit (100, 500, 700, 800).

9. The power supply circuit (700) according to claim 1,
wherein the output stage unit (704, 705, 706) includes an energy buffer (705).

10. The power supply circuit (800) according to claim 1,
further comprising a second energy storage element (805) provided in parallel to the energy storage element (804),
wherein the power supply circuit (800) is further arranged for a third mode and a fourth mode,
wherein, in the first mode, the input stage unit (802, 803) is further arranged for not storing energy in the second energy storage element (805) and for isolating the second energy storage (805) from the AC voltage input and the output stage unit (806) is further arranged for receiving energy from the second energy storage element (805) for providing the DC voltage,
wherein, in the second mode, the input stage unit (802, 803) is further arranged for storing energy in the second energy storage element (805) based on the received AC voltage and the output stage unit (806) is further arranged for not receiving energy from the second energy storage element (805) for providing the DC voltage,
wherein, in the third mode, the input stage unit (802, 803) is arranged for storing energy, based on the received AC voltage, in the energy storage element (804) and the second energy storage element (805) and the output stage unit (806) is arranged for neither receiving energy from the energy storage element (804) nor from the second energy storage element (805) for providing the DC voltage,
wherein, in the fourth mode, the input stage unit (802, 803) is arranged for neither storing energy in the energy storage element (804) nor in the second energy storage element (805) and for isolating the energy storage element (804) and the second energy storage element (805) from the AC voltage input and the output stage unit (806) is arranged for receiving energy from the energy storage element (804) and from the second energy storage element (805) for providing the DC voltage.

11. A lighting device including a power supply circuit (100, 500, 700, 800) according to claim 1 and a lighting load (105, 506, 707, 807) coupled to the output stage unit (104, 505, 704, 705, 706, 806) for receiving the DC voltage.

12. The lighting device according to claim 11,
wherein the lighting load (105, 506, 707, 807) includes a light emitting diode.

13. A method for providing a DC voltage based on an AC voltage, comprising:
a first mode (901) including the steps of
receiving (903) the AC voltage at an input stage unit and
storing (904) energy in an energy storage element based on the received AC voltage, and
a second mode (902) including the steps of
isolating (905) the energy storage element from an AC voltage input,
receiving (906) a voltage of the energy storage element at an output stage unit
and
DC-DC converting (907) the voltage of the energy storage element for providing the DC voltage,
wherein the first mode (901) and the second mode (902) are provided alternating and
in the first mode (901), the output stage unit does not receive energy from the energy storage element for providing the DC voltage, and
in the second mode (902), the input stage unit does not store energy in the energy storage element.

14. A software product for a controller of a power supply circuit, the software product comprising program code means for causing the power supply circuit to carry out the steps of the method as claimed in claim 13 when the software product is run on a controller of a power supply circuit according to claim 1.
